# EUROPEAN PATENT APPLICATION

(11) **EP 4 439 450 A1**
(43) Date of publication of application: **02.10.2024**
(21) Application number: 23165687.7
(22) Date of filing: 30.03.2023
(51) Int. Cl.: G06T 7/00, G06T 7/11

(54) **IMAGE CLASSIFICATION TRAINING METHOD**

(71) Applicant: Leica Instruments (Singapore) Pte Ltd, Singapore 608924 (SG)
(72) Inventor: SORMAZ, Milos, 9435 Heerbrugg (CH)
(74) Representative: Paustian & Partner Patentanwälte mbB

(57) **Abstract**

A computer-implemented method (100) for training an image classification machine-learning model (108) is provided for identifying abnormal tissue portions in intra-op surgical images. The method may comprise the step of providing a training dataset. The training dataset may comprise a plurality of labelled training images, in particular image pairs, further comprising:
an intra-op white light surgery image (102a);
an intra-op blue light surgery image (104), the white light surgery image (102a) and the blue light surgery image (104) having matching fields of view; and
at least an intra-op white light surgery image (102a);
at least one other image of different-modality; and
a label (106) for classifying at least one of an abnormal tissue portion and/or another tissue portion in at least one of the white light surgery image (102a) and/or the at least one other image of different-modality. Training the machine-learning model (108) may be based at least in part on the training dataset, thereby obtaining a trained machine-learning model (110) which is configured to identify one or more abnormal tissue portions in an intra-op white light surgery image (102b) captured during a surgery.

## Description

### TECHNICAL FIELD

The present invention generally relates to the field of data processing in imaging applications, and in particular to improved techniques for obtaining better image classification results to be used in machine-learning.

### BACKGROUND

Imaging is a technique of obtaining and interpreting images. Imaging is used in a variety of fields, ranging from physiology as well as other biological and medical applications. Imaging comprises the image acquisition itself, as well as the data interpretation to set the images into context e.g., of a study or research topic. Therefore, correct image classification is important. Images and parts of images have to be classified correctly to obtain insightful results from the image data collected. Improving image classification results would allow to improve the interpretation capabilities.

It is therefore desirable to further improve classification of image data to improve the interpretation capabilities of related techniques.

### SUMMARY

In one embodiment of the invention, a computer-implemented method for training an image classification machine-learning model is provided. The image classification machine-learning model may be adapted and configured to identify abnormal tissue portions in particular in pre-surgical, surgical and/or post-surgical images. The method may comprise a step of providing a training dataset. The training dataset may comprise a plurality of labeled training images, in particular image pairs. It may further comprise at least an intra-op white light surgery image, at least one other image of different-modality (can also be called different-quality) and/or a label for classifying at least one of an abnormal tissue portion in at least one of the white light surgery images. The method may further comprise the step of training the machine-learning model based at least in part on the training dataset. Thereby a trained machine-learning model can be obtained. The trained machine-learning model may be configured to identify one or more abnormal tissue portions, particularly in an intra-op white light surgery image captured during a surgery. This improves the classification of image data to improve the interpretation capabilities of related techniques.

Alternatively or additionally, the label may be for classifying another tissue portion in at least one of the white light surgery image. Further alternatively or additionally the label may be for either classifying at least one of an abnormal tissue portion or the label may be for classifying another tissue portion, or both, in the at least one other image of different quality.

In embodiments of the invention, at least an intra-op white light surgery image, at least one other image of different-modality and a label may be provided in a method step. A label may be any tag that allows the identification of respective abnormal tissue portions. Further, a label may be any tag that allows the identification of other tissue portions. Examples may be visible in-image tags, such as highlighting the respective area or providing meta data in the images with respective position information regarding the identified image parts or for classifying the image itself.

Therein, the term "abnormal tissue portion" may refer to a "diseased tissue portion" or to a tissue portion which is "not functional according to standard tissue parameter performance" as it is defined by case law and/or based on a scientific understanding. One optional definition of abnormal tissue portion may be: A diseased tissue portion being an irregular physical condition that requires treatment or makes the individual unable to work (adapted from German Federal Social Court decision (BSGE) and based on German Social Code (SozR): BSGE as of March 15, 2028, B 3 KR 18/17 R and therein § 27 referring to BSGE 26, 240, 242 = SozR Nr 23 to § 182 RVO; BSGE 30, 151, 152 f = SozR Nr 37 to § 182 RVO). It may additionally be that the individual abnormal tissue portion is impaired in its bodily functions or that the deviation from the normal condition has a disfiguring effect. Further, the terms pathological condition or pathology can synonymously be used for the term "abnormal tissue portion".

Another tissue portion may be any tissue portion that fulfills a respective function and that has to be identified e.g., for training purposes to distinguish it from other tissue portions. Further it may allow to identify certain organs and their respective tissue.

Additionally, or alternatively, the image classification machine-learning model may comprise at least a convolutional neural network. Convolutional neural networks (CNNs) improve the performance with image processing. A CNN is a deep learning algorithm responsible for processing animal visual cortex-inspired images in the form of grid patterns. The grid may be a representation of a pixel-based image structure. CNNs are designed to automatically detect and segment specific objects and learn spatial hierarchies of features from low to high-level patterns. They may have three main types of layers, at least one convolutional layer, at least one pooling layer and at least one fully connected layer (FCL). A convolutional layer may be the first layer, potentially followed by additional convolutional layers or pooling layers. The fully connected layer may function as final layer. With each layer, the CNN may increase in its complexity, and it may identify greater portions of the image. Earlier layers focus on simple features, such as colors and edges. As the image data progresses through the layers of the CNN, it may start to recognize larger elements or shapes of the object until it finally identifies the intended object. The intended object may be a structure / pattern in the noise profile, not necessarily something in the image that has a representation in the real world such as a shape or pattern of an imaged object or imaged scene. An imaged scene may be a multiplicity of objects and/or their arrangement in space. Furthermore, an imaged scene may evolve over time.

Image classification may comprise an image part identification. Therefore, not only the full image may be classified, but in particular certain parts thereof. Therefore, parts of an image may be identified and labeled that show abnormal tissue portions and/or that show other tissue portions of interest.

The term "intra-op surgical images" refers in particular to images taken during surgery. Nevertheless, other images may be provided as well, e.g., from an autopsy showing a respective condition in a tissue or a certain organ and/or tissue type. Furthermore, post-op images may be used showing the excised tissue part for study and/or verification. Alternatively or additionally, the cavity in the body, where the tissue has been excised may be shown for verification of op success. Pre-op images may also be provided for planning an op.

The term "white light image" particularly refers to images that are taken under white light conditions (visible spectrum). Methods may be implemented, wherein white light images alone may allow to determine an abnormal tissue type or a particular tissue type of interest by a trained physician. In particular, a respective type of glioma or tumor may be identified by a trained physician as abnormal tissue portion. Therefore, the trained physician may provide the labels in that the trained physician labels (one can also say "tags") the image data based on previous experience. Some pathologies can be identified from white light (short: WL) images e.g. high grade gliomas (HGGs). For other pathologies this may be more difficult and the error margin may be much higher. Therefore, even trained physicians may sort the respective tissue portion into a wrong category (also to be called: a class). Therefore, an image of different quality may be used. The quality here does not refer to the image quality such as resolution, brightness, color depth or any similar measure of successful (or less successful) measurement of the image. The term quality here refers to the way of obtaining the image data itself: In other words, two different and distinct methods may be used to obtain the white light images vs. the other images.

In other words, this means that in the broadest sense of the described method only white light images are used and labeled by a trained surgeon or trained physician. The respective information for labeling the abnormal tissue portion or the other tissue portion is thus provided by the surgeon and/or the physician to label the images or parts thereof, accordingly. In a particular embodiment of the method white light and different-modality images may be used to further improve the quality of labeling. This will further improve the quality of prediction and classification as more information is taken into account. This may be particularly relevant for conditions which are difficult to identify otherwise or from white light images alone.

Identifying one or more tissue portions in an intra-op white light surgery image captured during a surgery may be used to identify at least one tissue portion, in particular identifying at least one of a healthy or normal tissue portion, an abnormal tissue portion and/or cancerous tissue. Particularly, the identification may work such that all the normal tissue is labeled indicating the presence of abnormal tissue. This process may be called as inverse labeling. The term inverse labeling refers to the fact that the tissue of interest becomes apparent on the images as the spared image section or spared features (all features without label become relevant). Additionally or alternatively, identifying the abnormal tissue by labeling the abnormal tissue may be performed as described herein.

Intra-op imaging is particularly not performed for diagnostic purposes during surgery and particularly no image classification is performed during surgery. Furthermore, training is particularly not performed during surgery and the obtained data (e.g. images) is particularly not used for performing surgery or for planning a surgery. Therefore, no method of surgery and/or diagnostics may be provided by the method described herein. In particular, the image classification machine-learning model may be adapted and configured (solely) for training on images that are (solely) used for research purposes. Alternatively or additionally, the image classification machine-learning model may be (solely) used for training future physicians to allow them to identify certain types of tissue, based on experience to-be-built-up and not necessarily to rely upon a method as described herein. At least some image data may be obtained from dead tissue samples for training. Alternatively or additionally, the machine learning algorithm may be used to perform a surgery.

According to an aspect of the invention the training dataset comprises at least a multiplicity of different-modality training images selected from any one of intra-op blue light surgery images, contrast-enhanced white light images, intra-op blue light surgery images modified to show anatomy around at least one fluorescence signal, Magnetic Resonance Images (MRI), independently labelled white light images, or ultrasound images. These other-quality (other-modality) images may improve the accuracy and fidelity of the prediction of the pathological tissue by the machine-learning model.

The fluorescence signal may be obtained in that the fluorescence of fluorophores such as protoporphyrin IX (PpIX) is obtained such that an anatomy visualization is improved and such that high contrast visualization of fluorescence is possible.

Digital surgical microscope accessory filters for viewing fluorescence of fluorophores having an excitation peak between 380 nm to 430 nm may be used. Additionally or alternatively, an observation may be performed comprising the long-wave blue, green, yellow, and/or red spectrum in the spectral band greater than 444 nm.

"Blue light images" may be any of an image with a dye, particularly a fluorescent dye. Synonymously, the term "fluorescence images" may be used. A device for taking these blue light images may be the FL400 by the applicant as parameterized and characterized for the latest model available on the date of the application or on the date of priority, respectively. The FL400 is registered as class 2 device showing a 635 nm fluorescence peak at excitation with "blue" light at 400 nm radiation. The fluorescence will be emitted by a respective fluorescent dye, such as 5-aminolevulinic acid (5-ALA). Apart from the fluorescence which labels the pathology, a dark blue background may be around it. Therefore, the blue light images may be used to guide supervised labeling of the white light images, in particular with white light images having the same field of view.

Additionally or alternatively, other types of images can be used to train the algorithm. Even MRI images may be provided with overlapping field of view (short: FoV). These images may have a matching field of view, but every image may be taken individually and independently. In other words, white light and blue light / fluorescence images may be used for training.

Magnetic Resonance Images (MRI) may be used, particularly T1 weighted and/or T2 weighted, particularly depending on the suspected pathology.

Tissue can be characterized by two different relaxation times - T1 and T2. T1 (longitudinal relaxation time) may refer to the time constant which determines the rate at which excited protons return to equilibrium. It may be a measure of the time taken for spinning protons to realign with the external magnetic field. T2 (transverse relaxation time) may be the time constant which determines the rate at which excited protons reach equilibrium or go out of phase with each other. It may be a measure of the time taken for spinning protons to lose phase coherence among the nuclei spinning perpendicular to the main field.

Blue light images may be used for high grade glioma (short: HGG) identification. The blue light images may allow or may make it easier for someone to label (tag) the training data set, particularly the white light images. Furthermore, the other images that may be provided may be labeled as well.

Methods may be implemented, wherein white light images alone may allow to determine an abnormal tissue type or a particular tissue type of interest by a trained physician. A respective type of glioma or tumor may be identified and labeled by a trained physician as described elsewhere throughout the description. Furthermore, detecting pathologies from WL images may be difficult e.g., for HGGs. Therefore, even trained physicians may want to rely on blue light images (synonymously used for fluorescence images), e.g. showing a fluorescence peak at 635 nm when a respective dye is irradiated with blue 400 nm light as described herein. This may enhance the pathology as it appears in front of a dark blue background around it.

In other words, for the physician to use the respective information provided by the blue light or fluorescent image it may be overlayed with white light images. The physician may see this overlay on binoculars or on a screen with a camera. White light image labeling based on fluorescence image overlay shall lead to improved predictions of the type of glioma in image classification. Alternatively, WL images and blue light image pairs (same for other different-modality images) may be placed next to each other for labeling the WL image. Additionally or alternatively, labeling the WL image may be performed automatically and/or semiautomatically based on labeling fluorescent areas in a blue light image with the same FoV. Low grade gliomas (LGG) do not show fluorescence though. Therefore, other different-modality images may be used for either labeling and/or for training the machine-learning model. One example may be using MRI (magnetic resonance imaging) to detect the gliomas, particularly LGG. Nevertheless, also HGGs might be identified based on MRI.

According to an aspect of the invention the label is obtained based on at least one matching pair of an intra-op white light surgery image and at least one other image of different quality with matching field of view. This allows to improve the labeling of the white light images and to improve the classification results based thereon.

In other words, white light images and different-modality images may be provided in matching pairs. A matching pair may be an image with overlapping image parts. An overlapping image is particularly an image part that shows at least a part of the same tissue in the same individual.

Alternatively or additionally, in some embodiments, it is not only pairs (i.e. 2 images), because multiple different images all particularly showing the same field of view e.g., beyond aforementioned pair of images, can be used. Further examples of images (that may not be matching pairs) will be provided elsewhere in the description e.g., contrast enhanced white light images and blue-light (fluorescence) images.

In other words, in particular embodiments of a method as described herein, it could be enough to have only a white light image labeled, if a neurosurgeon can provide an accurate label thus marking the pathological tissue. However, further quality images may be provided such as blue light (fluorescence) and other images as described above. These different-modality images may improve the accuracy and fidelity of the prediction of the pathological tissue by the machine-learning model.

In other words, training is not necessarily based on images having the same field of view. During training a full set of images can be used which comprises at least one image of different modality. Here it is referred to examples given throughout the description. The same field of view is particularly used for labeling white light images to use those for an improved (supervised) training. Matching field of views can be realized in all typical types of images and can be based potentially on an image guided surgery, even for a same field of view with MRI.

During training only white light images may be provided, but someone may be needed to provide the "tags". Labeling white light might be based on, but not limited to, blue light images, MRIs and ultrasound images, as long as the same field of view is used. Blue light images may comprise false positives and false negatives which in particular may be labeled as such.

In yet other words, four approaches may be used independently or in different combinations to get the tags (may also be called labels).

One may use only white light (WL) images and label them based on the knowledge of an experienced physician to detect HGG, LGG, meningioma and other tumor types, pathologies and/or anatomy to name a few examples.

Alternatively or additionally, one may use "multi-modal imaging" or "multi-view strategy" for training deep learning models. One may use images of different qualities / modalities (including WL) independently and label them all independently to detect HGG, LGG, meningioma and other tumor types, pathologies, anatomy etc. Alternatively or additionally, one may use pair of images (WL and blue light) for the detection of HGG, both showing the same FoV. Alternatively or additionally, one may use more than two images (e.g. WL, blue light, MRI), all showing the same FoV, to detect HGG, LGG, meningioma and other tumor types, pathologies and/or anatomy to name a few examples. According to an aspect of the invention the matching field of view is based on recording at least partially overlapping white light images and images of other quality, particularly blue light images with the same field of view. Alternatively or additionally, the matching field of view is based on aligning the images or based on aligning the images using an image-guided surgery system. This improves the labeling and thus improves the classification of the images and/or the image parts.

Alignment of intra-operative images may be based on aligning the images based on finding a feature overlap in the images if the same field of view is used. In real time, an image guided system (IGS) may send the MRI cross section and provide it to the training linked with the white light image. Another approach might be sending a ping to an Image Guiding System (IGS). An IGS is an image processing device configured for: selecting an intra-op image which may be stored in a memory. The intra-op image may have a field of view. The image processing device may determine a matching image based on: selecting the matching image from the memory, or constructing the matching image from image data. The matching image may match the field of view of the intra-op image. Providing matching fields of view of images to medical professionals can aid in simplifying the interpretation of the images. In an embodiment, the image processing device may select the intra-op image from a plurality of intra-op images stored in the memory. Providing matching fields of view of images to medical professionals can aid in the interpretation of the images. It can reduce computational complexity to have the matching fields of view already in memory.

In other words, aligning can be performed fully automated based on feature recognition or aligning images may be performed manually as it would be possible in the case of MRI images where 3D recordings exist so surgeon could find manually roughly the same FoV as in the microscope image.

According to an aspect of the invention the machine-learning model is provided with a training dataset of tissue images and wherein the at least one label is at least a tissue type, a tissue state, an abnormal tissue portion, a neoplasm, a tumor, a brain tumor, a malignant brain tumor, a glioma, a cancer tissue type, a High Grade Glioma tissue type and/or a Low Grade Glioma tissue type, meningioma and/or schwannoma. The method improves classification of the images in either of the above specified classes with higher accuracy and validity.

The terms of abnormal tissue and its inverse, normal tissue, have been defined previously and the readers attention is drawn to this previous definition to avoid big recasting of text and to improve readability. A tissue portion may refer to a part of a tissue. Thus, not the whole tissue (the whole organ) has to be taken into account, but only parts relevant to the application.

Gliomas are in particular a type of tumor that starts in the glial cells of the brain or the spine. Gliomas comprise about 30 percent of all brain tumors and central nervous system tumors, and 80 percent of all malignant brain tumors. Gliomas are in particular classified by cell type, by grade, and by location. Categorizing gliomas according to their grade, which is determined by pathologic evaluation of the tumor, may lead to the following grade classification. The neuropathological evaluation and diagnostics of brain tumor specimens may be performed according to WHO Classification of Tumours of the Central Nervous System.

Biologically benign gliomas (BBG: WHO grade I) are comparatively low risk and can be removed surgically depending on their location. Low-grade gliomas (LGG: WHO grade II) are well-differentiated (not anaplastic); these tend to exhibit benign tendencies and portend a better prognosis for the patient. However, they have a uniform rate of recurrence and increase in grade over time so may be classified as malignant. Furthermore, low-grade gliomas may not exhibit fluorescence as described above. Therefore, other different-modality images may be used to label respective LGGs for identifying them in respective images.

High-grade gliomas (HGG: WHO grades III-IV) are undifferentiated or anaplastic. HGG may be classified as malignant and carry a worse prognosis of survival for the patient when compared to LGG (or BGG). Numerous grading systems are used, but the most common one is the World Health Organization (WHO) grading system for astrocytoma, under which tumors are graded from I (least advanced disease-best prognosis) to IV (most advanced disease-worst prognosis). Without limiting the scope, for matters of understanding only, the WHO system is referenced here to define tumor and the different classes thereof.

In other words, blue light images (obtained using an FL400) are particularly used to label high grade gliomas. For low grade gliomas, other different-modality images may be used to overlay it with the respective white light images for labeling the latter. Therefore, the respective method further allows to prepare a training data set that can specifically target either of low grade glioma and/or high grade glioma. It may further allow to differentiate both type of gliomas.

According to an aspect of the invention the machine-learning model may be trained and configured such that the trained machine-learning model may be configured to output white light image frames. These white light image frames may further comprise object detection labeling the identified and labeled image part. This labeling may be based on placing a frame with a basic shape on multiple white light image frames of all the white light image frames. Alternatively or additionally, the machine-learning model may be trained and configured such that the trained machine-learning model is configured to output an image comprising instance segmentation based on the identified and labeled instance in an image part.

Outputting white light image frames may particularly refer to giving out induvial frames of a video stream and/or a video. A white light image frame may thus refer to a single white light image.

Object detection may be used to identify the respective tissue. Object detection may refer to predicting an object's location and size in the image by surrounding it with a square and/or another simple shape (circle, rectangular, ellipsoid, trapezoid, etc.).

Placing a frame with a basic shape (being a simple shape) on multiple white light image frames may refer to a way of highlighting the tissue portion of interest. The frame with a basic shape shall not to be mixed up with the white light image frame. The latter refers to a white light image that might be embedded in a video or video stream. The frame with a basic shape is a layover onto the white light image frame. The basic shape may refer to a square, a circle, an ellipse or other geometrical ground shapes. It particularly distinguishes from complex shapes in that it does not form an instance segmentation as it is described in the following, particularly not resembling the contours of the tumor or tissue. Instance segmentation particularly refers to the task of segregating objects in a complex visual environment and is an important area of computer vision. Instance segmentation is a special form of image segmentation dealing with detecting instances of objects and demarcating their boundaries. Instance segmentation may be particularly useful to separately monitor distinct tissue types, tumors, LGG and/or HGG and other tissue aspects as they were described above. In other words, an instance segmentation with instance can be a certain pathology identified in the image. In other words, instance segmentation may refer to predicting an object's location and size in the image by drawing and / or masking it (resembling its contours).

In other words, a white light image frame may be isolated from a video stream. Based on object detection a frame with a basic shape such as a square, a rectangular, a circle and/or an ellipse is overlayed with the white light image frame to allow highlighting the tissue portion of interest. Furthermore or alternatively, an instance segmentation may identify the tissue portion of interest and highlighting the form of the tissue portion.

According to an independent aspect of the invention a computer-implemented method for classifying and labeling an image part may be based on an image classification machine-learning model trained according to a method as described above. The computer-implemented method may comprise at least the step of providing at least one white light image to the trained machine-learning model. It may further comprise the step of labeling the at least one white light image with a label. The method improves the classification of image data.

This method may refer to the runtime of a trained machine-learning model. Particularly, only white light images may be used as input. The method may output identification tags and/or labels identifying the tissue portion of interest. In particular, the trained machine-learning model may not be used during surgery but may be used to train physicians or med-students to learn recognizing a respective abnormal tissue type.

The method may provide white light image frames from a video stream with either a simple frame for framing the tissue portion of interest based on an object identification or instance segmentation to highlight the tissue of interest particularly the outer contour of the tissue of interest.

According to an embodiment of the method for classifying and labeling an image part white light image frames may be provided to the trained machine-learning model. Further, multiple white light image frames of all the white light image frames may be labeled to identify at least a tissue type, a tissue state, an abnormal tissue portion, a neoplasm, a tumor, a brain tumor, a malignant brain tumor, a glioma, a cancer tissue type, a High-Grade Glioma tissue type, and/or a Low-Grade Glioma tissue type. The method improves classification of the images in either of, but not limited to, the above specified classes with higher accuracy and validity.

In other words, here and elsewhere, the tissue of interest may refer, but not limited to, to the above stated categories (classes) of tissues.

According to yet another embodiment of the method for classifying and labeling an image part the trained machine-learning model is configured to output a basic shape on multiple image frames of all the image frames identifying a labeled region in the image. Alternatively or additionally, the trained machine-learning model is configured to output multiple white light image frames of all the white light image frames comprising instance segmentation based on the identified and labeled instance in an image part. Alternatively or additionally, identifying one or more abnormal tissue portions is performed during a surgery.

The method for classifying and labeling an image part may be described based on the aspects, advantages and effects of the training method and vice versa. Also, with respect to the other categories, such as the devices and systems described herein, aspects, advantages, features and their effects may be described that may be used to describe the respective methods and vice versa.

According to an independent aspect of the invention a data processing apparatus may be provided. In particular the data processing apparatus is a computer device or a control unit for an imaging device or imaging system. The data processing apparatus may comprise means for carrying out any of the methods as described in further detail above.

According to an independent aspect of the invention a computer program with a program code for performing any of the above-described methods, when the computer program is run on a processor, may be provided.

According to an independent aspect of the invention a dataset, in particular a validation dataset and/or training dataset may be provided which may be usable for a machine-learning model as described herein. The dataset may comprise a plurality of images, or references thereto, obtained using any of the above-described methods.

According to an independent aspect of the invention an imaging device or imaging system, particularly a microscope, configured for use in any of the above-described methods may be provided.

According to an embodiment of the imaging device or imaging system it may be configured to obtain white light image frames during a surgery operation. It may further be configured to provide the white light image frames to a trained machine-learning model in real time during a surgery operation. Further, it may be configured to label multiple white light image frames of all the white light image frames in real time during the surgery operation and it may be configured to give out at least some of the labeled multiple white light image frames for providing information to a surgeon in real time during the surgery operation.

According to yet another embodiment of the imaging device or imaging system it may be configured to give out at least some of the labeled multiple white light image frames for providing information to a surgeon in real time during the surgery operation. Therein instance segmentation based on the identified and labeled image part may provide surgery instructions to the surgeon. Alternatively or additionally, the imaging device or imaging system as described above may be configured to give out at least some of the labeled multiple white light image frames for providing information to a surgeon in real time during the surgery operation, wherein instance segmentation based on the identified and tagged image part provides surgery instructions to the surgeon, wherein the surgery instructions comprise incision lines.

Alternatively, or additionally, the machine-learning model may comprise at least a convolutional neural network. Convolutional neural networks have been described in detail above. The respective advantages and features apply here as well. Particularly, the convolutional neural network architecture is the same as for the training method.

According to another aspect of the invention, a data processing apparatus may be provided. This data processing apparatus may in particular be a computer device or a control unit for an imaging device or imaging system. They may comprise means for carrying out any of the methods described above.

Embodiments of the invention also provide a data processing apparatus, in particular a computer device or a control unit for a microscope, comprising means for carrying out any of the methods disclosed herein. A computer program with a program code is also provided for performing any of the methods disclosed herein when the computer program is run on a processor.

Certain aspects of the invention also provide a dataset, in particular a training dataset, validation dataset and/or training dataset, usable for a machine-learning model. The dataset may comprise a plurality of microscopy images, or references thereto. The images may be obtained using any of the methods disclosed herein.

Accordingly, embodiments may be based on, or allow for, using a machine-learning model or machine-learning algorithm. Machine-learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm. Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied, and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g., be used to store, manipulate, or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

The possible use cases for the results produced by embodiments of the invention are manifold. For example, models may be trained to detect specific cell phenotypes, or to target specific organelles, and compare them at different SNRs. This can help to create models that evaluate phototoxicity of assays, or even simpler than that by using simple cell detection and segmentation (cell counting and measures like area of cell nuclei, or if some markers are showing or not).

According to another aspect of the invention, an imaging device or imaging system may be provided. This imaging device and/or imaging system may in particular be a microscope. They may be configured for use in any of the methods described above. With respect to the imaging device or imaging system, the device or system may provide the same technical advantages as described with respect to the methods described above.

### SHORT DESCRIPTION OF THE FIGURES

The disclosure may be better understood by reference to the following drawings:
- FIG. 1:: A schematic overview of a workflow to train an image part identification machine-learning model.
- FIG. 2A:: A blue light training image.
- FIG. 2B:: A white light training image in matching field of view as the blue light image shown in FIG 2A.
- FIG. 3:: A schematic overview of a workflow to perform an image part identification.
- FIG. 4:: A schematic illustration of a system in which embodiments of the invention may be implemented.

### DETAILED DESCRIPTION

Exemplary embodiments of the invention will now be described which provide a workflow to train an image part identification machine-learning model, a workflow to perform an image part identification and a system in which the other described embodiments of the invention may be implemented.

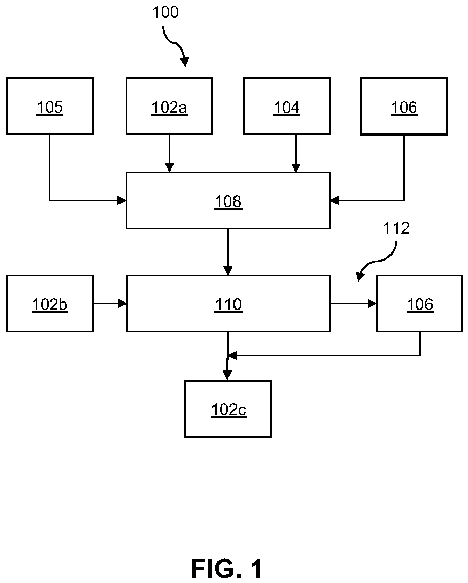

FIG. 1 illustrates a schematic overview of a workflow to train an image part identification machine-learning model. The workflow may be implemented in a computer-implemented method 100 configured to train an image classification machine-learning model 108. The computer-implemented training method 100 may at least provide the following steps.

The image classification machine-learning model 108 may be adapted and configured to identify abnormal tissue portions in pre-surgical, surgical and/or post-surgical images. In particular, the image classification machine-learning model may be adapted and configured (solely) for training on images that are (solely) used for research purposes. Alternatively or additionally, the image classification machine-learning model may be solely used for training future physicians to allow them to identify certain types of tissue, based on experience and not necessarily based on a respective method as described herein.

The method comprises a step of providing a training dataset. The training dataset comprises a plurality of labelled training images, in particular image pairs. The method may further comprise at least an intra-op white light surgery image 102a, at least one other image 105 of different-modality and a label 106 for classifying at least one of an abnormal tissue portion in at least one of the white light surgery images 102a. The different-modality image 105 is in one embodiment a blue light image 104. The blue light image is used to compare it with the white light image 102a, particularly both having the same field of view. Having the same field of view allows an experienced physician to place the labels 106 in the white light image 102a. One can say that a supervised machine-learning training method is thus implemented as the white light image labels 106 are placed under human supervision.

In other words, four approaches may be used independently or in different combinations to get the labels (may also be called tags).

One may use only white light (WL) images and label them based on the knowledge of an experienced physician to detect HGG, LGG, meningioma and other tumor types, pathologies and/or anatomy to name a few examples.

Alternatively or additionally, one may use "multi-modal imaging" or "multi-view strategy" for training deep learning models. One may use images of different qualities / modalities (including WL) independently and label them all independently to detect HGG, LGG, meningioma and other tumor types, pathologies, anatomy etc. Alternatively or additionally, one may use pair of images (WL and blue light) for the detection of HGG, both showing the same FoV. Alternatively or additionally, one may use more than two images (e.g. WL, blue light, MRI), all showing the same FoV, to detect HGG, LGG, meningioma and other tumor types, pathologies and/or anatomy to name a few examples.

Additionally or alternatively, different-modality images 105 may be used to implement a machine-learning training method 100. The different-modality images 105, other than the blue light image, may be directly fed to the machine-learning model 108 to train the latter. Further alternatively or additionally, some other different-modality images 105 may be used to label the white light images 102a with a label 106. In this case the used different-modality images 105 and the white light images 102a shall have the same field of view.

In particular, images of all qualities / modalities are labeled i.e. WL, blue light, MRI, ultrasound etc. This labelling may be done regardless of if they have the same or different FoVs.

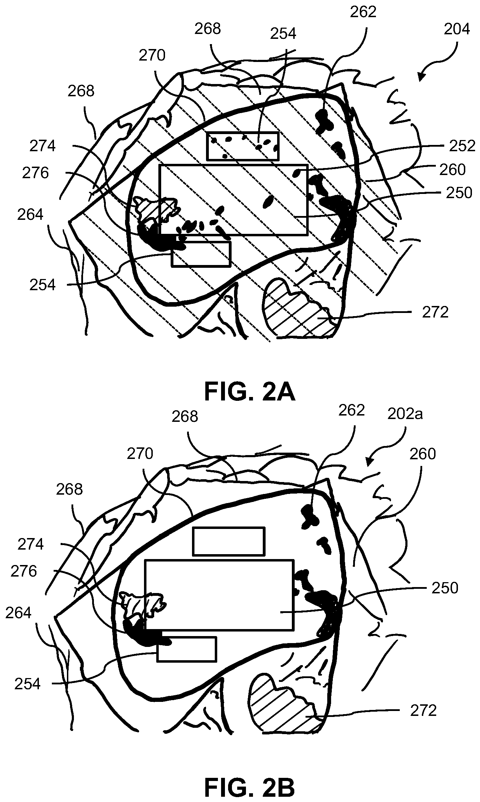

In an exemplary embodiment of the method 100 solely white light images 102a might be fed to the machine-learning model 108 for training. The respective white light images 102a might be classified using labels 106 by an experienced physician or surgeon. Nevertheless, using the blue-light image guided labeling approach further increases the accuracy and validity of the results later and improves the image classification. Independent from the labeling approach, feeding also different-modality images 105 other than blue-light images 104 to the machine-learning model to be trained 108 further improves the classification results. In particular, using different-modality images 105 other than blue light images 104 allows to detect other types of tissues such as low-grade gliomas 262 (see FIG. 2A and FIG. 2B) which may not exhibit any fluorescence when exposed to fluorophores or fluorophore precursors such as 5-ALA.

Alternatively or additionally, the label 106 may be for classifying another tissue portion (see FIG. 2B) in at least one of the white light surgery images 102a. Further alternatively or additionally the label 106 may be for either classifying at least one of an abnormal tissue portion (e.g. an inflamed gland 276) or the label 106 may be for classifying another tissue portion (e.g. a gland 274) or both of them in the at least one other different-modality image 105. This may result in a labeled white light image 102c.

The method further comprises the step of training the machine-learning model 108 based at least in part on the training dataset. Thereby a trained machine-learning model 110 can be obtained which is configured to identify one or more abnormal tissue portions in an intra-op white light surgery image 102b, particularly captured during a surgery. The white light surgery image 102b, particularly captured during surgery, may be fed to the trained machine-learning model 110 to obtain a particular label 106. This label may indicate a classified image part 250 as shown with respect to the white light image 202a of an organ with healthy tissue, high grade glioma HGG 252 and low grade glioma 262 in FIG. 2B.

In FIG. 2A a blue light image 204 of an organ with healthy tissue 260 and HGG 252, as well as LGG 262. LGG 262 does not show up in the fluorescence image, when compared to the white light image 202a of the same organ from the same patient in the same field of view, the white light image 202a showing healthy tissue 260 and LGG tissue (which might be much harder to detect as indicated here). LGG will not show up in the fluorescence images, as there is no fluorescence imaging modality to detect LGG. Therefore, the LGG 262 does not show up (or be only detectable to an experienced surgeon or physician) in the image as no (or very little, barely detectable) fluorescence is present. On the other hand, fluorescence might particularly not result from LGG. Also, arteries 264 are visible in FIGs. 2A and 2B. Incision lines can be highlighted based on the classification from a trained machine-learning model 110.

The training dataset may comprise at least a multiplicity of different-modality training images 105 selected from any one of intra-op blue light surgery images 104, contrast-enhanced white light images, blue light image with improved anatomy visualization, Magnetic Resonance Images (MRI), independently labelled white light images 102a, or ultrasound images.

The label 106 for the white light image 102a may be obtained for example based on at least one matching pair of an intra-op white light surgery image 102a and at least one other image 105 of different quality, particularly a blue light image 204 with matching field of view. FIG. 2A and FIG. 2B show a respective matching pair of images. Furthermore, the lab 106 is shown as a basic shape 250, here in form of a rectangular geometric structure.

Additionally or alternatively any of the four different ways of labelling may be performed as they are described elsewhere.

The matching field of view is particularly based on recording at least partially overlapping white light images 102a and different-modality images 105, particularly blue-light images 104 with the same field of view. Alternatively of additionally, the matching field of view is based on aligning the images or based on aligning the images using an image-guided surgery system.

In other words, the machine-learning model 108 is provided with a training dataset 202a, 204 of tissue images as they are shown in FIG. 2A and FIG. 2B as matter of example. Additionally or alternatively, only the image shown as matter of example in FIG. 2B may be used. Alternatively or additionally, more than 2 images may be used. As matter of example, one can add MRI as a third image with the same field of view (FoV). In the training dataset 202a, 204, the at least one label 106 is at least a tissue type 260, a tissue state 272, an abnormal tissue portion, a neoplasm, a tumor, a brain tumor, a malignant brain tumor, a glioma, a cancer tissue type, a High Grade Glioma tissue type 252 and/or a Low Grade Glioma tissue type 262, meningioma, schwannoma etc.

The machine-learning model 108 may be trained and configured such that the trained machine-learning model 110 may be configured to output white light image frames. These white light image frames may further comprise object detection labeling the identified and labeled image part 250. This labeling may be based on placing a frame with a basic shape 254 on multiple white light image frames of all the white light image frames. Alternatively or additionally the machine-learning model 108 may be trained and configured such that the trained machine-learning model 110 is configured to output an image comprising instance segmentation based on the identified and labeled instance in an image part 250 (e.g. HGG 252). If the machine learning model is trained to detect LGG 262 then a square with the instance segment will be placed around LGG 262 too. In fact, it will be placed around anything that was labeled in the training data set (e.g. healthy piece of anatomy even).

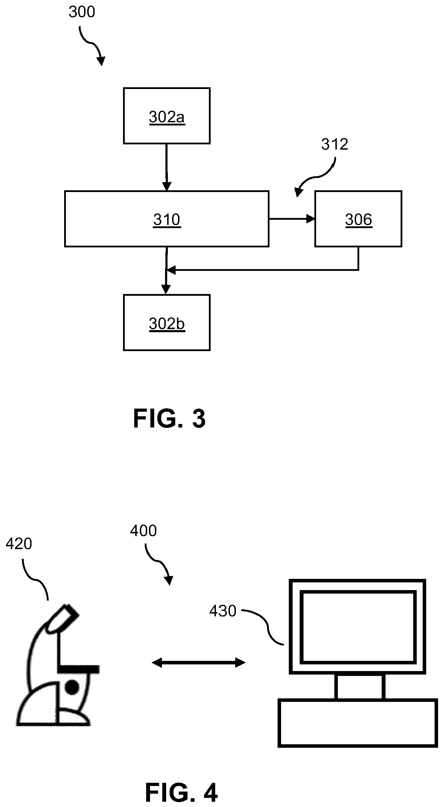

FIG. 3 illustrates a schematic overview of a workflow to perform an image part identification. FIG. 3 shows a computer-implemented method 300 for classifying and labeling an image part 250. It may be based on an image classification machine-learning model 108 trained according to a method 100 as described above. The computer-implemented method 300 for identifying and labeling may comprise at least the step of providing at least one white light image 302a to the trained machine-learning model 310. It may further comprise the step of labeling 312 the at least one white light image 302a with a label 306. This results in a labeled white light image 302b, particularly to be used for training physicians and surgeons, not necessarily during surgery. Alternatively or additionally the white light training image 302b may be used during surgery to guide a physician or surgeon.

The method 300 for classifying and labeling an image part 250 white light image frames 302a may be provided to the trained machine-learning model 310. Further, multiple white light image frames 302a of all the white light image frames 302a may be labeled to identify at least a tissue type 260, a tissue state 272, an abnormal tissue portion, a neoplasm, a tumor, a brain tumor, a malignant brain tumor, a glioma, a cancer tissue type, a High Grade Glioma tissue type 252, and/or a Low Grade Glioma tissue type 262, meningioma and/or schwannoma. Further, the method 300 for classifying and labeling an image part the trained machine-learning model 310 may be configured to output a basic shape 254 on multiple image frames 302b of all the image frames identifying a labeled region 250 in the image. Alternatively or additionally, the trained machine-learning model 310 is configured to output multiple white light image frames 302b of all the white light image frames 302b comprising instance segmentation based on the identified and labeled instance in an image part 250. Alternatively or additionally, identifying one or more abnormal tissue portions is performed during a surgery.

FIG. 4 illustrates a schematic illustration of a system 400 in which embodiments of the invention may be implemented. A data processing apparatus may be provided. In particular the data processing apparatus is a computer device 430 or a control unit for an imaging device or imaging system 400. The data processing apparatus may comprise means for carrying out any of the methods 100, 300 as described in further detail above.

Further, a computer program with a program code for performing any of the above-described methods 100, 300, when the computer program is run on a processor, particularly of a computer device 430, may be provided. Furthermore, a dataset, in particular a validation dataset and/or training dataset may be provided which may be usable for a machine-learning model 100, 300 as described herein. The dataset may comprise a plurality of images 102a, 104, 105, or references thereto, obtained using any of the above-described methods 100, 300.

Furthermore, an imaging device or imaging system 400, particularly a microscope 420, configured for use in any of the above-described methods 100, 300 may be provided. The imaging device or imaging system 400 may be configured to obtain white light image frames during a surgery operation. It may further be configured to provide the white light image frames to a trained machine-learning model 310 in real time during a surgery operation. Further, it may be configured to label multiple white light image frames of all the white light image frames in real time during the surgery operation and it may be configured to give out at least some of the labeled multiple white light image frames for providing information to a surgeon in real time during the surgery operation as shown e.g. by basic shape 254 in Fig. 2B.

The imaging device or imaging system 400 may be configured to give out at least some of the labeled multiple white light image frames for providing information to a surgeon in real time during the surgery operation. Therein instance segmentation based on the identified and labeled image part 250 may provide surgery instructions to the surgeon. These surgery instructions might be highlighting incision lines, such as those incision lines 268 shown in FIGs. 2A and 2B. Alternatively or additionally, the imaging device or imaging system 400 as described above may be configured to give out at least some of the labeled multiple white light image frames for providing information to a surgeon in real time during the surgery operation, wherein instance segmentation based on the identified and tagged image part 250 provides surgery instructions to the surgeon, wherein the surgery instructions comprise incision lines.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a microscope 420 comprising a system 400 to perform a method 100, 300 as described in connection with one or more of the Figs. 1 to 3. Alternatively, a microscope 420 may be part of or connected to a system 400 structured and configured to perform a method 100, 300 as described in connection with one or more of the Figs. 1 to 3. Fig. 4 shows a schematic illustration of a system 400 configured to perform a method 100, 300 described herein. The system 400 comprises a microscope 420 and a computer system 430. The microscope 420 is configured to take images and is connected to the computer system 430. The computer system 430 is configured to execute at least a part of a method described herein. The computer system 430 may be configured to execute a machine-learning algorithm. The computer system 430 and microscope 420 may be separate entities but can also be integrated together in one common housing. The computer system 430 may be part of a central processing system of the microscope 420 and/or the computer system 430 may be part of a subcomponent of the microscope 420, such as a sensor, an actor, a camera or an illumination unit, etc. of the microscope 420.

The computer system 430 may be a local computer device (e.g., personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 430 may comprise any circuit or combination of circuits. In one embodiment, the computer system 430 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 430 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 430 may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system 430 may also include a display device, one or more speakers, and a keyboard and/or controller, which can include a mouse, trackball, touch screen, voice-recognition device, or any other device that permits a system user to input information into and receive information from the computer system 430.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable. Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### LIST OF REFERENCE SIGNS

- 100: computer-implemented method configured to train an image part identification machine-learning model
- 102a: white light image of training dataset
- 102b: white light image
- 102c: labeled white light image
- 104: blue light image of training dataset
- 105: different-modality image
- 106: label
- 108: machine-learning model / convolutional neural network
- 110: trained machine-learning model / trained convolutional neural network
- 112: labeling at least one white light image
- 202a: white light image of organ with healthy and HGG tissue
- 204: blue light image of organ with healthy and HGG tissue
- 250: classified image part
- 252: high grade glioma (HGG)
- 254: rectangular basic shape
- 260: tissue of interest / healthy tissue / (normal) tissue type
- 262: low grade glioma (LGG)
- 264: artery
- 268: incision line
- 272: normal tissue in a defined state e.g., active
- 274: gland
- 276: inflamed gland
- 300: independent prediction workflow
- 302a: white light image
- 302b: labeled white light image
- 306: label
- 310: trained machine-learning model / trained convolutional neural network
- 312: labeling of white light image
- 400: system
- 420: microscope
- 430: computer device

## Claims

1. A computer-implemented method (100) for training an image classification machine-learning model (108) for identifying abnormal tissue portions in intra-op surgical images with at least the following steps:
providing a training dataset, the training dataset comprising a plurality of labelled training images, in particular image pairs, comprising:
at least an intra-op white light surgery image (102a);
at least one other different-modality image (105); and
a label (106) for classifying at least one of an abnormal tissue portion and/or another tissue portion (260) in at least one of the white light surgery image (102a) and/or the at least one other different-modality image (105); and
training the machine-learning model (108) based at least in part on the training dataset, thereby obtaining a trained machine-learning model (110) which is configured to identify one or more abnormal tissue portions in an intra-op white light surgery image (102b), particularly captured during a surgery.

2. The method (100) of claim 1, wherein the training dataset comprises at least a multiplicity of different-modality training images selected from any one of the following:
- an intra-op blue light surgery image (104),
- contrast-enhanced white light images created by artificially modifying colors of white light images to enhance visibility of at least one anatomical detail,
- blue light images with fluorescence-enhanced anatomy visualization,
- Magnetic Resonance Images (MRI), particularly T1 weighted and/or T2 weighted, particularly depending on the suspected pathology,
- independently labeled white light images, or
- ultrasound images.

3. The method (100) of any one of the preceding claims, wherein the label (106) is obtained based on at least one matching pair of an intra-op white light surgery image (102b) and at least one other different-modality image (105) with matching field of view.

4. The method (100) of any one of the preceding claims, wherein the matching field of view is based on at least one of the following:
- recording at least partially overlapping white light images (102a) and different-modality image (105), particularly blue light images (104), with the same field of view;
- aligning the images; or
- aligning the images, if one of them is MRI, using an image-guided surgery system.

5. The method (100) of any one of the preceding claims, wherein the machine-learning model (108) is provided with a training dataset (202a, 204) of tissue images and wherein the at least one label (106) is at least one of the following:
- a tissue type (260),
- a tissue state (272),
- an abnormal tissue portion,
- a neoplasm,
- a tumor,
- a brain tumor,
- a malignant brain tumor,
- a glioma,
- a cancer tissue type,
- a High Grade Glioma tissue type (262),
- a Low Grade Glioma tissue type (252),
- meningioma, or
- schwannoma.

6. The method (100) of any one of the preceding claims, wherein the machine-learning model (108) is trained and configured such that the trained machine-learning model (110) is configured to output white light image frames and comprising object detection labeling the identified and labeled image part (250) with a basic shape (254) on multiple white light image frames of all the white light image frames; and/or
wherein the machine-learning model (108) is trained and configured such that the trained machine-learning model (110) is configured to output an image comprising instance segmentation based on the identified and labeled instance in an image part (250).

7. A computer-implemented method (300) for classifying and labeling an image part (250) based on an image classification machine-learning model (108) trained according to a method (100) of any one of the preceding claims, the computer-implemented method (300) comprising at least the following steps:
- providing at least one white light image to the trained machine-learning model (310), and
- labeling (312) the at least one white light image with a label (306).

8. The computer-implemented method (300) according to claim 7, wherein white light image frames are provided to the trained machine-learning model (310) and wherein multiple white light image frames of all the white light image frames are labeled to identify at least one of the following:
- a tissue type (260),
- a tissue state (272),
- an abnormal tissue portion,
- a neoplasm,
- a tumor,
- a brain tumor,
- a malignant brain tumor,
- a glioma,
- a cancer tissue type
- a High Grade Glioma tissue type (262),
- a Low Grade Glioma tissue type (252),
- meningioma, or
- schwannoma.

9. The computer-implemented method (300) according to claim 8, wherein the trained machine-learning model (310) is configured to output a basic shape (254) on multiple image frames of all the image frames identifying a labeled region in the image; and/or
wherein the trained machine-learning model (110) is configured to output multiple white light image frames of all the white light image frames comprising instance segmentation based on the identified and labeled instance in an image part (250); and/or
wherein identifying one or more abnormal tissue portions is performed during a surgery.

10. A data processing apparatus, in particular a computer device (430) or a control unit for an imaging device or imaging system (400), comprising means for carrying out the method (100, 300) of any one of claims 1 to 9.

11. A computer program with a program code for performing the method (100, 300) of any one of claims 1 to 9 when the computer program is run on a processor.

12. A dataset, in particular a validation dataset and/or training dataset, usable for a machine-learning model (108, 110, 310), the dataset comprising a plurality of images (102a, 104, 105), or references thereto, obtained using the method (100, 300) of any one of claims 1 to 9.

13. An imaging device or imaging system (400), particularly a microscope (420), configured for use in the method (100, 300) of any one of claims 1 to 9.

14. The imaging device or imaging system (400) according to claim 13, configured to obtain white light image frames during a surgery operation,
configured to provide the white light image frames to a trained machine-learning model (310) in real time during a surgery operation,
configured to label multiple white light image frames of all the white light image frames in real time during the surgery operation, and
configured to give out at least some of the labeled multiple white light image frames for providing information to a surgeon in real time during the surgery operation.

15. The imaging device or imaging system (400) according to any one of claims 13 to 14, configured to give out at least some of the labeled multiple white light image frames for providing information to a surgeon in real time during the surgery operation, wherein instance segmentation based on the identified and labeled image part (250) provides surgery instructions to the surgeon; and/or the imaging device or imaging system (400) according to any one of claims 13 to 14, configured to give out at least some of the labeled multiple white light image frames for providing information to a surgeon in real time during the surgery operation, wherein instance segmentation based on the identified and labeled image part (250) provides surgery instructions to the surgeon, wherein the surgery instructions comprise incision lines.
